# EUROPEAN PATENT APPLICATION

(11) **EP 4 847 276 A2**
(43) Date of publication of application: **02.12.2026**
(21) Application number: 26213465.3
(22) Date of filing: 07.10.2022
(51) Int. Cl.: B60C 11/13

(54) **BI-DIRECTIONAL SIPE AND/OR SLOT**

(30) Priority: 16.10.2021 US 202163256543 P
(62) Document number(s) of the earlier application(s) in accordance with Art. 76 EPC: 22881920.7 / 4 415 981
(71) Applicant: Bridgestone Americas Tire Operations, LLC, Nashville, TN 37201 (US)
(72) Inventor: SEVERYN, David M., Akron, 44317 (US); WISCHT, JR., Paul J., Akron, 44317 (US)
(74) Representative: Marks & Clerk LLP

(57) **Abstract**

In one aspect, a tire is provided, comprising: a tread portion comprising a tread rib or a tread block, a sipe included in tread rib or the tread block, wherein the sipe includes a center section located axially between opposing outer sections, and wherein the center section and each outer section include a radially outer portion and a radially inner portion, wherein the radially outer portion of each outer section has a circumferential width WT1, wherein the radially outer portion of the center section has a circumferential width WT2, wherein the circumferential width WT1 is greater than the circumferential with WT2, wherein the radially inner portion of each outer section includes an axially outer portion having a radial depth DB1E and an axially inner portion having a radial depth DB1I, and wherein the radial depth DB1E is less than the radial depth DB1I.

## Description

### BACKGROUND

The present application is a divisional application of European patent application number 22881920.7. Tires are often designed to optimize performance in a variety of road conditions. For example, an all-weather tire may include tread features that are designed to optimize performance in dry road conditions, wet road conditions, and snow-covered/icy road conditions.

Obtaining traction in snow and ice is often achieved by providing "biting edges" in the tread of the tire. These "biting edges" are often in the form of sipes or slots. However, too many sipes or slots can lead to a loss of tread block or rib stiffness, which may be undesirable in the performance optimization of the tire, particularly in dry roadway conditions.

Accordingly, what is needed is a tire tread feature to balance snow and ice traction with dry roadway traction.

### SUMMARY

In one aspect, a tire is provided, the tire comprising: a tread portion comprising at least one of a tread rib or a tread block, a sipe included in the tread rib or the tread block, wherein the sipe includes a center section located axially between opposing outer sections, and wherein the center section and each outer section include a radially outer portion and a radially inner portion, wherein the radially outer portion of each outer section has a circumferential width WT1, wherein the radially outer portion of the center section has a circumferential width WT2, wherein the circumferential width WT1 is greater than the circumferential with WT2, wherein the radially inner portion of each outer section includes an axially outer portion having a radial depth DB1E and an axially inner portion having a radial depth DB1I, and wherein the radial depth DB1E is less than the radial depth DB1I.

In another aspect, a tire is provided, the tire comprising: a tread portion comprising at least one of a tread rib or a tread block, a sipe included in the tread rib or the tread block, wherein the sipe includes a center section located axially between opposing outer sections, and wherein the center section and each outer section include a radially outer portion and a radially inner portion, wherein the radially outer portion of each outer section has a circumferential width WT1, wherein the radially outer portion of the center section has a circumferential width WT2, wherein the circumferential width WT1 is greater than the circumferential width WT2, wherein the radially inner portion of each outer section has a circumferential width WB1 that is less than the width WT1, wherein the radially inner portion of the center section has a circumferential width WB2 that is greater than the width WT2, and wherein the circumferential width WB1 is less than the circumferential width WB2, and wherein the width WB2 is less than the width WT1.

In another aspect, a tire sipe blade is provided, the tire sipe blade comprising: a center section located axially between opposing outer sections, wherein the center section and each outer section include a radially outer portion and a radially inner portion, wherein the radially outer portion of each outer section has a circumferential width WT1, wherein the radially outer portion of the center section has a circumferential width WT2, wherein the circumferential width WT1 is greater than the circumferential with WT2, wherein the radially inner portion of each outer section includes an axially outer portion having a radial depth DB1E and an axially inner portion having a radial depth DB1I, and wherein the radial depth DB1E is less than the radial depth DB1I.

### BRIEF DESCRIPTION OF THE DRAWINGS

The accompanying figures, which are incorporated in and constitute a part of the specification, illustrate various example aspects, and are used merely to illustrate various example aspects. In the figures, like elements bear like reference numerals.
**FIG. 1A** illustrates a perspective view of a tire tread **100** having a tread block **106** with a bi-directional sipe and/or slot **110**.
**FIG. 1B** illustrates a plan view of tire tread **100** having tread block **106** with bi-directional sipe and/or slot **110**.
**FIG. 1C** illustrates a perspective view of tread block **106** with a bi-directional sipe and/or slot **110**.
**FIG. 1D** illustrates a perspective view of half of tread block **106** with a bi-directional sipe and/or slot **110**.
**FIG. 1E** illustrates a perspective view of half of tread block **106** with a bi-directional sipe and/or slot **110**.
**FIG. 2A** illustrates a perspective view of a tire sipe blade **230** for forming a bi-directional sipe and/or slot.
**FIG. 2B** illustrates an elevation view of tire sipe blade **230** for forming a bi-directional sipe and/or slot.
**FIG. 2C** illustrates a cross-sectional view of a tire sipe blade **230** taken about a plane formed by reference line **A-A** in **FIG. 2B**.
**FIG. 2D** illustrates a cross-sectional view of a tire sipe blade **230** taken about a plane formed by reference line **B-B** in **FIG. 2B**.
**FIG. 2E** illustrates a cross-sectional view of a tire sipe blade **230** taken about a plane formed by reference line **C-C** in **FIG. 2B**.
**FIG. 2F** illustrates a plan view of tire sipe blade **230** for forming a bi-directional sipe and/or slot.

### DETAILED DESCRIPTION

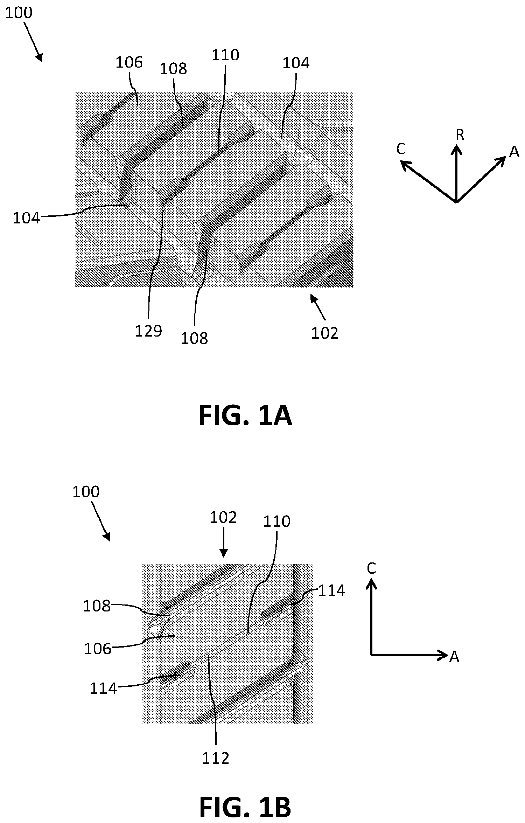

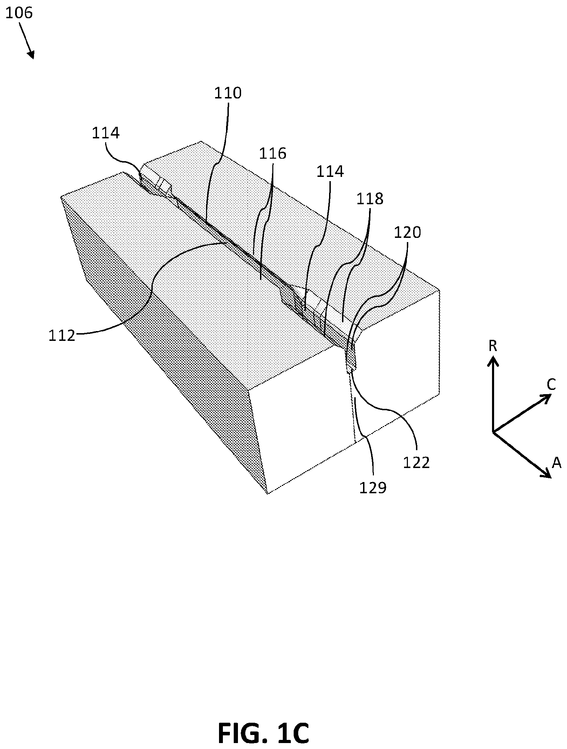

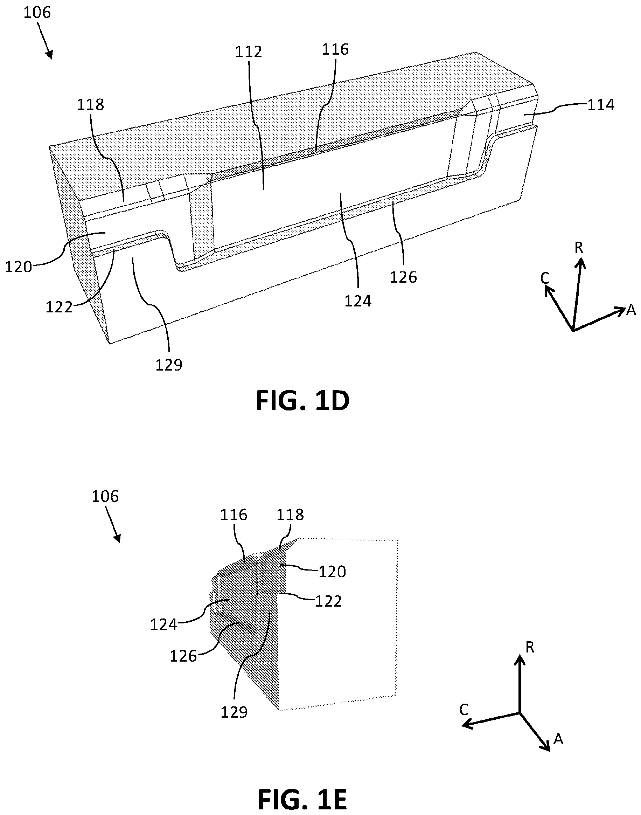

**FIGS. 1A-1E** illustrate a tire tread **100** having a tread block **106** with a bi-directional sipe and/or slot **110**. Tire tread **100** may be utilized on any of a variety of tires, including for example tires intended for use in both dry running surfaces and snow and ice-covered running surfaces.

Axes and planes described herein are illustrated in **FIGS. 1A-1E**, and include a circumferential axis **C** oriented in the circumferential direction of the tire, a radial axis **R** oriented in the radial direction of the tire, and an axial axis **A** oriented in the axial direction of the tire.

Tire tread **100** may include at least one block row **102** defined by parallel circumferential grooves **104**. Axial slots/sipes **108** may extend at least partially across block row **102** to define individual tread blocks **106**. At least one tread block **106** includes a bi-directional sipe and/or slot **110**. Alternatively, tire tread **100** may include at least tread rib in lieu or tread blocks, and the tread rib includes a bi-directional sipe and/or slot **110**.

Sipe/slot **110** includes a center section **112** located between (e.g., axially between) opposing outer sections **114**. Sipe/slot **110** includes opposing key edges **116** limited to center section **112**. Key edges **116** are a negative, or undercut angle with respect to the radial direction **R** at the radially outer surface, which results in block **106** having opposing, inwardly-facing acute angles at the radially outer portion.

Opposing key edges **116** result in a bi-directional (that is, the tire is not required to have a specific direction of rolling) that result in increased snow and ice traction. The bi-directional nature of opposing key edges **116** allows the tire to function as intended regardless of the rolling direction of the tire, such that an installer can mount the tire on the vehicle with the tread rolling either direction without tire performance degradation. Additionally, the bi-directional nature of opposing key edges **116** may provide a benefit in snow and ice traction both when the tire is accelerating and braking. That is, the acute angle key edge **116** "bites" into snow and ice surfaces to increase traction of the tire on those surfaces. The shape of key edge **116** is most easily viewed in **FIG. 1E**.

Sipe/slot **110** includes opposing chamfered edges **118** limited to outer sections **114**. Chamfered edges **118** are a positive angle with respect to the radial direction **R** at the radial outer surface. That is, chamfered edge **118** are angled in the opposite direction as key edges **116**. The shape of chamfered edge **118** is most easily viewed in **FIG. 1E**.

Outer section opposing sidewalls **120** extend substantially in the radial direction **R** radially inwardly from chamfered edges **118** to an outer base **122**. Center section opposing sidewalls **124** extend substantially in the radial direction **R** radially inwardly from key edges **116** to a center base **126**.

Outer sections **114** may include a step resulting from a shorter radial depth (**D1E** described below) at an outermost, exterior portion, and a longer radial depth (**D1I** described below) at an innermost, interior portion. The result is the formation of tie bars **129** within sipe/slot **110**. Tie bars **129** may act to "tie" together the two halves of block **106** that is bisected by sipe/slot **110**, resulting in increased stiffness in block **106**.

The relative dimensions and angles of sipe/slot **110** are outlined below with respect to the sipe blade **230**.

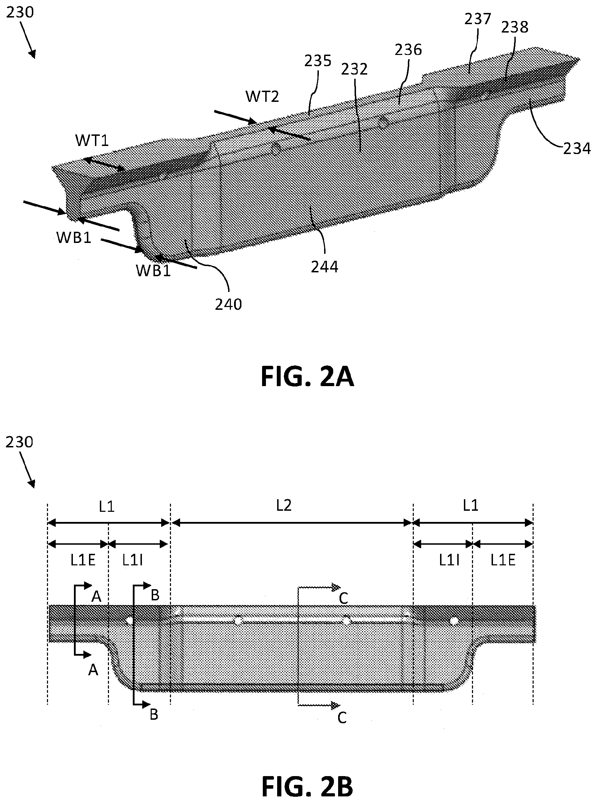

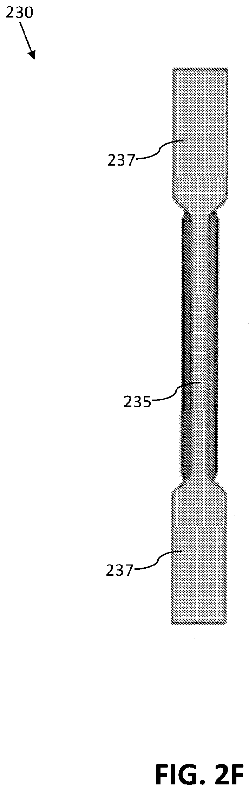

**FIGS. 2A-2F** illustrate a tire sipe/slot blade **230** for forming a bi-directional sipe and/or slot, such as sipe/slot **110**.

Blade **230** includes a center section **232** located between (e.g., axially between) opposing outer sections **234**. Center section **232** includes a top center section surface **235** and each outer section **234** includes a top outer section surface **237**.

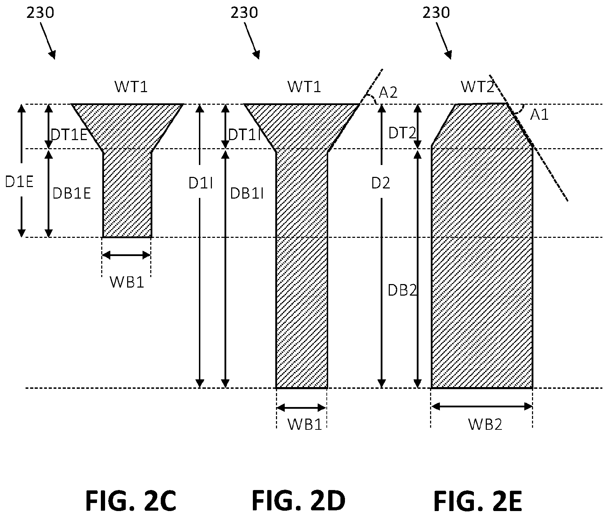

Blade **230** includes opposing key forming edges **236** limited to center section **232**. Key forming edges **236** form negative, or undercut angle (key edges **116**) with respect to the radial direction **R** at the radially outer surface of tire tread **100**, which results in block **106** having opposing, inwardly-facing acute angles (key edges **116**) at the radially outer portion. The shape of key forming edge **236** is most easily viewed in **FIGS. 2A** and **2C****-2E**.

Blade **230** includes opposing chamfered forming edges **238** limited to outer sections **234**. Chamfered forming edges **238** form a positive angle with respect to the radial direction **R** at the radial outer surface. That is, chamfered forming edge **238** are angled in the opposite direction as key forming edges **236**. The shape of chamfered forming edge **238** is most easily viewed in **FIGS. 2A** and **2C****-2E**.

Outer sections **234** include outer section opposing sidewalls **240** that form sidewalls **120**. Sidewalls **240** extend downward from chamfered forming edges **238**. Center section **232** includes center section opposing sidewalls **244** that form sidewalls **124**. Sidewalls **244** extend downward from key forming edges **236**.

Top outer section surface **237** includes a width (e.g., circumferential width) **WT1**. In one aspect, width **WT1** is between about 1.0 mm and about 3.0 mm. In another aspect, width **WT1** is between 1.0 mm and 3.0 mm. In another aspect, width **WT1** is between about 1.5 mm and about 2.5 mm. In another aspect, width **WT1** is between 1.5 mm and 2.5 mm. In another aspect, width **WT1** is between about 1.75 mm and about 2.25 mm. In another aspect, width **WT1** is between 1.75 mm and 2.25 mm. In another aspect, width **WT1** is about 2.0 mm. In another aspect, width **WT1** is 2.0 mm.

Top center section surface **235** includes a width (e.g., circumferential width) **WT2**. In one aspect, width **WT2** is between about 0.5 mm and about 2.0 mm. In another aspect, width **WT2** is between 0.5 mm and 2.0 mm. In another aspect, width **WT2** is between about 0.7 mm and about 1.8 mm. In another aspect, width **WT2** is between 0.7 mm and 1.8 mm. In another aspect, width **WT2** is between about 0.8 mm and about 1.5 mm. In another aspect, width **WT2** is between 0.8 mm and 1.5 mm. In another aspect, width **WT2** is about 1.0 mm. In another aspect, width **WT2** is 1.0 mm.

Width **WT1** is greater than width **WT2**. In one aspect, width **WT1** is about 2.0 times the value of width **WT2**. In another aspect, width **WT1** is 2.0 times the value of width **WT2**. In another aspect, width **WT1** is between 1.5 and 2.5 times the value of width **WT2**.

Sidewalls **240** are separated by a width (e.g., circumferentially) **WB1**.

Sidewalls **244** are separated by a width (e.g., circumferentially) **WB1**.

Width **WB1** is less than width **WT1**. Width **WB2** is greater than width **WT2**. Width **WB1** is less than width **WB2**. In one aspect, width **WB1** and width **WB2** are both less than width **WT1**.

In one aspect, width **WB1** is equal to width **WT2**. In another aspect, width **WB2** is equal to width **WT1**.

Each of outer sections **234** may include a length (e.g., axially) **L1**.

Each of outer sections **234** may include an outermost exterior portion having a shorter radial depth (**D1E**) and a length (e.g., axially) **L1E**, and an interior portion having a longer radial depth (**D1I**) and a length **L1I**. Length **L1** is equal to length **L1E** plus length **L1I**.

**FIG. 2C** illustrates a cross-sectional view of a tire sipe blade **230** taken about a plane formed by reference line **A-A** in **FIG. 2B**. **FIG. 2D** illustrates a cross-sectional view of a tire sipe blade **230** taken about a plane formed by reference line **B-B** in **FIG. 2B**. **FIG. 2E** illustrates a cross-sectional view of a tire sipe blade **230** taken about a plane formed by reference line **C-C** in **FIG. 2B**.

Outermost exterior portion of each outer section **234** may include a total radial depth **D1E**, with chamfered forming edges **238** having a radial depth **DT1E** and sidewalls **240** having a radial depth **DB1E**. Depth **D1E** is equal to depth **DT1E** plus depth **DB1E**.

Interior portion of each outer section **234** may include a total radial depth **D1I**, with chamfered forming edges **238** having a radial depth **DT1I** and sidewalls **240** having a radial depth **DB1I**. Depth **D1I** is equal to depth **DT1I** plus depth **DB1I**.

In one aspect, radial depth **DB1E** is less than radial depth **DB1I**. In one aspect, radial depth **DT1E** is equal to radial depth **DT1I**. In another aspect, radial depths **DT1E**, **DT1I**, and **DT2** are all equal to one another.

Center section **232** may include a total radial depth **D2**, with key forming edges **236** having a radial depth **DT2** and sidewalls **244** having a radial depth **DB2**. Depth **D2** is equal to depth **DT2** plus depth **DB2**.

In one aspect, radial depth **DB2** is greater than radial depth **DB1E**. In another aspect, depth **DB2** is equal to depth **DB1I**. In another aspect, depth **D2** is equal to depth **D1I**. In another aspect, depth **DT2** is equal to depth **DT1I**.

Center section **232** may include a length (e.g., axially) **L2**.

Key forming edges **236** include an angle **A1** relative to the axial direction. In one aspect, angle **A1** is between about 45 degrees and about 75 degrees. In another aspect, angle **A1** is between 45 degrees and 75 degrees. In another aspect, angle **A1** is between about 50 degrees and about 70 degrees. In another aspect, angle **A1** is between 50 degrees and 70 degrees. In another aspect, angle **A1** is between about 55 degrees and about 65 degrees. In another aspect, angle **A1** is between 55 degrees and 65 degrees. In another aspect, angle **A1** is about 60 degrees. In another aspect, angle **A1** is 60 degrees.

Chamfered forming edges **238** include an angle **A2** relative to the axial direction. In one aspect, angle **A2** is between about 45 degrees and about 75 degrees. In another aspect, angle **A2** is between 45 degrees and 75 degrees. In another aspect, angle **A2** is between about 50 degrees and about 70 degrees. In another aspect, angle **A2** is between 50 degrees and 70 degrees. In another aspect, angle **A2** is between about 55 degrees and about 65 degrees. In another aspect, angle **A2** is between 55 degrees and 65 degrees. In another aspect, angle **A2** is about 60 degrees. In another aspect, angle **A2** is 60 degrees.

Angle **A1** may be equal to angle **A2**, with each being relative to the axial direction **A**, but one being positive and the other being negative.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See Bryan A. Garner, A Dictionary of Modern Legal Usage 624 (2d. Ed. 1995). Also, to the extent that the terms "in" or "into" are used in the specification or the claims, it is intended to additionally mean "on" or "onto." To the extent that the term "substantially" is used in the specification or the claims, it is intended to take into consideration the degree of precision available in tire manufacturing. To the extent that the term "selectively" is used in the specification or the claims, it is intended to refer to a condition of a component wherein a user of the apparatus may activate or deactivate the feature or function of the component as is necessary or desired in use of the apparatus. To the extent that the term "operatively connected" is used in the specification or the claims, it is intended to mean that the identified components are connected in a way to perform a designated function. As used in the specification and the claims, the singular forms "a," "an," and "the" include the plural. Finally, where the term "about" is used in conjunction with a number, it is intended to include ± 10 % of the number. In other words, "about 10" may mean from 9 to 11.

As stated above, while the present application has been illustrated by the description of embodiments and aspects thereof, and while the embodiments and aspects have been described in considerable detail, it is not the intention of the applicants to restrict or in any way limit the scope of the appended claims to such detail. Additional advantages and modifications will readily appear to those skilled in the art, having the benefit of the present application. Therefore, the application, in its broader aspects, is not limited to the specific details, illustrative examples shown, or any apparatus referred to. Departures may be made from such details, examples, and apparatuses without departing from the spirit or scope of the general inventive concept.

The present application discloses the inventions defined in the following clauses:
1. A tire comprising:
   a tread portion comprising at least one of a tread rib or a tread block,
   a sipe included in the tread rib or the tread block,
   wherein the sipe includes a center section located axially between opposing outer sections, and wherein the center section and each outer section include a radially outer portion and a radially inner portion,
   wherein the radially outer portion of each outer section has a circumferential width WT1,
   wherein the radially outer portion of the center section has a circumferential width WT2,
   wherein the circumferential width WT1 is greater than the circumferential with WT2,
   wherein the radially inner portion of each outer section includes an axially outer portion having a radial depth DB1E and an axially inner portion having a radial depth DB1I, and
   wherein the radial depth DB1E is less than the radial depth DB1I.
2. The tire of clause 1, wherein the sipe center section has opposing key edges on its radially outer portion.
3. The tire of clause 2, wherein the opposing key edges are angled by an angle A1 relative to an axial direction of the tire, and wherein the angle A1 is 60 degrees.
4. The tire of clause 1, wherein the width WT1 is 2.0 times the value of the width WT2.
5. The tire of clause 1, wherein the width WT1 is between 1.5 and 2.5 times the value of the width WT2.
6. The tire of clause 1, wherein the radially inner portion of each outer section has a circumferential width WB1, and wherein the width WB1 is less than the width WT1.
7. The tire of clause 1, wherein the radially inner portion of the center section has a circumferential width WB2, and wherein the width WB2 is greater than the width WT2.
8. The tire of clause 1, wherein the radially inner portion of each outer section has a circumferential width WB1, wherein the radially inner portion of the center section has a circumferential width WB2, wherein the width WB1 is less than the width WB2, and wherein the width WB1 and the width WB2 are both less than the width WT1.
9. A tire comprising:
   a tread portion comprising at least one of a tread rib or a tread block,
   a sipe included in the tread rib or the tread block,
   wherein the sipe includes a center section located axially between opposing outer sections, and
   wherein the center section and each outer section include a radially outer portion and a radially inner portion,
   wherein the radially outer portion of each outer section has a circumferential width WT1,
   wherein the radially outer portion of the center section has a circumferential width WT2,
   wherein the circumferential width WT1 is greater than the circumferential width WT2,
   wherein the radially inner portion of each outer section has a circumferential width WB1 that is less than the width WT1,
   wherein the radially inner portion of the center section has a circumferential width WB2 that is greater than the width WT2, and
   wherein the circumferential width WB1 is less than the circumferential width WB2, and wherein the width WB2 is less than the width WT1.
10. The tire of clause 9, wherein the sipe center section has opposing key edges on its radially outer portion.
11. The tire of clause 10, wherein the opposing key edges are angled by an angle A1 relative to an axial direction of the tire, and wherein the angle A1 is 60 degrees.
12. The tire of clause 9, wherein the radially inner portion of each outer section includes an axially outer portion having a radial depth DB1E and an axially inner portion having a radial depth DB1I, and wherein the radial depth DB1E is less than the radial depth DB1I.
13. The tire of clause 9, wherein the width WT1 is 2.0 times the value of the width WT2.
14. A tire sipe blade comprising:
   a center section located axially between opposing outer sections,
   wherein the center section and each outer section include a radially outer portion and a radially inner portion,
   wherein the radially outer portion of each outer section has a circumferential width WT1,
   wherein the radially outer portion of the center section has a circumferential width WT2,
   wherein the circumferential width WT1 is greater than the circumferential with WT2,
   wherein the radially inner portion of each outer section includes an axially outer portion having a radial depth DB1E and an axially inner portion having a radial depth DB1I, and
   wherein the radial depth DB1E is less than the radial depth DB1I.
15. The tire of clause 14, wherein the sipe blade center section has opposing key forming edges on its radially outer portion.
16. The tire of clause 15, wherein the opposing key forming edges are angled by an angle A1 relative to an axial direction, and wherein the angle A1 is 60 degrees.
17. The tire of clause 14, wherein the width WT1 is 2.0 times the value of the width WT2.
18. The tire of clause 14, wherein the radially inner portion of each outer section has a circumferential width WB1, and wherein the width WB1 is less than the width WT1.
19. The tire of clause 14, wherein the radially inner portion of the center section has a circumferential width WB2, and wherein the width WB2 is greater than the width WT2.
20. The tire of clause 14, wherein the radially inner portion of each outer section has a circumferential width WB1, wherein the radially inner portion of the center section has a circumferential width WB2, wherein the width WB1 is less than the width WB2, and wherein the width WB1 and the width WB2 are both less than the width WT1.

## Claims

1. A tire comprising:
a tread portion comprising at least one of a tread rib or a tread block,
a sipe included in the tread rib or the tread block,
wherein the sipe includes a center section located axially between opposing outer sections, and
wherein the center section and each outer section include a radially outer portion and a radially inner portion,
wherein the radially outer portion of each outer section has a circumferential width WT1,
wherein the radially outer portion of the center section has a circumferential width WT2,
wherein the circumferential width WT1 is greater than the circumferential width WT2,
wherein the radially inner portion of each outer section has a circumferential width WB1 that is less than the width WT1,
wherein the radially inner portion of the center section has a circumferential width WB2 that is greater than the width WT2, and
wherein the circumferential width WB1 is less than the circumferential width WB2, and wherein the width WB2 is less than the width WT1.

2. The tire of claim 1, wherein the sipe center section has opposing key edges on its radially outer portion.

3. The tire of claim 2, wherein the opposing key edges are angled by an angle A1 relative to an axial direction of the tire, and wherein the angle A1 is 60 degrees.

4. The tire of claim 1, wherein the radially inner portion of each outer section includes an axially outer portion having a radial depth DB1E and an axially inner portion having a radial depth DB1I, and wherein the radial depth DB1E is less than the radial depth DB1I.

5. The tire of claim 1, wherein the width WT1 is 2.0 times the value of the width WT2.
